Europäisches Patentamt

European Patent Office

Office européen des brevets

(11) Veröffentlichungsnummer: **0 024 667**
**B1**

(12) **EUROPÄISCHE PATENTSCHRIFT**

(51) Int. Cl.³: **C 09 B 67/40, C 09 B 67/46**

(45) Veröffentlichungstag der Patentschrift:
04.05.83

(21) Anmeldenummer: 80104892.7

(22) Anmeldetag: 16.08.80

(54) Verfahren zur Herstellung flüssiger Farbstoffzusammensetzungen und deren Verwendung.

(30) Priorität: 29.08.79 DE 2934949

(43) Veröffentlichungstag der Anmeldung:
11.03.81 Patentblatt 81/10

(45) Bekanntmachung des Hinweises auf die Patenterteilung:
04.05.83 Patentblatt 83/18

(84) Benannte Vertragsstaaten:
CH DE FR GB IT LI

(56) Entgegenhaltungen:
DE-A-1 469 606
DE-A-2 204 725
DE-A-2 358 080
DE-A-2 643 214
GB-A-2 014 597

(73) Patentinhaber: BAYER AG, Zentralbereich Patente, Marken und Lizenzen, D-5090 Leverkusen 1, Bayerwerk (DE)

(72) Erfinder: Koll, Jochen, Ing.grad., Am Telegraf 40, D-5068 Odenthal 3 (DE)
Erfinder: Mölls, Hans-Heinz, Dr., Max-Beckmann-Strasse 29, D-5090 Leverkusen (DE)
Erfinder: Hörnle, Reinhold, Dr., Hufelandstrasse 42, D-5000 Köln 80 (DE)
Erfinder: Schuffenhauer, Erhard, Ing.grad., Carl-Duisberg-Strasse 310, D-5090 Leverkusen (DE)
Erfinder: Brandt, Horst, Dr., Antoniusstrasse 4, D-5068 Odenthal (DE)
Erfinder: Bremer, Fritz, Dr., Paul-Klee-Strasse 64, D-5090 Leverkusen (DE)
Erfinder: Wolf, Karlheinz, Dr., Paul-Klee-Strasse 77, D-5090 Leverkusen (DE)
Erfinder: Schiwy, Willy, Schubert Strasse 9, D-4019 Monheim (DE)

# 0 024 667

## Verfahren zur Herstellung flüssiger Farbstoffzusammensetzungen und deren Verwendung

Gegenstand der Erfindung ist ein Verfahren zur Herstellung konzentrierter, lagerstabiler Flüssigformierungen von in Wasser schwer- bzw. unlöslichen Farbstoffen, d. h. Farbstoffen, die keine wasserlöslich machenden Gruppen enthalten, durch ein Membrantrennverfahren.

Derartige Präparationen wurden bislang im technischen Maßstab in der Weise hergestellt, daß man die wasserfeuchten Farbstoffpreßkuchen mit den üblichen Dispergier- und Stellmitteln versetzt und anschließend einer Naßmahlung unterwirft.

Diese an sich bewährte Methode stößt jedoch immer dann auf erhebliche Schwierigkeiten, wenn bei der Farbstoffsynthese sich der Farbstoff in sehr kleinen, schwer filtrierbaren Teilchen abscheidet. Man erhält dann innerhalb wirtschaftlich vertretbarer Filtrationszeiten Preßkuchen mit Farbstoffgehalten von nur 5 – 50%.

In diesen Fällen mußte bisher die ggf. mit Dispergiermitteln versetzte Farbstoffdispersion entweder thermisch aufkonzentriert oder aber vollständig zur Trockne eingedampft und anschließend redispergiert werden.

Abgesehen davon, daß diese Methoden einen hohen Energieaufwand erfordern und manche Farbstoffe eine derartige thermische Beanspruchung nicht unbeschadet überstehen sowie aus sicherheitstechnischen Gründen eine inerte Trocknung vorgenommen werden muß, weisen diese Verfahren eine Reihe anderer schwerwiegender Nachteile auf. So ist beispielsweise bei der Aufkonzentrierung bzw. Eintrocknung regelmäßig eine Aggregation und zum Teil Kristallvergrößerung zu beobachten, die nur durch aufwendige Zerkleinerungsoperationen rückgängig gemacht werden können. Darüber hinaus treten beim Mahlen des zur Trockne eingedampften Farbstoffpreßkuchens sowie beim Wiederanschlagen des Farbstoffpulvers lästige Staubprobleme auf.

Darüber hinaus sind bereits Verfahren zur Entsalzung und zur Aufkonzentrierung von wäßrigen Dispersionen schwer- oder unlöslicher Farbstoffe durch Membrantrennverfahren bekannt. So werden beispielsweise gemäß DE-B-2 204 725 (entspricht GB-A-1 359 898) Farbstoffpreßkuchen mit Wasser angeschlämmt und dann über eine halbdurchlässige Membran geleitet, die Wasser und Salze, jedoch nicht die feinen Farbstoffteilchen durchläßt. Dieses Verfahren zeigt jedoch den Nachteil, daß es zu starker Sedimentation der Farbstoffe in den Strömungskanälen der Membrantrennapparaturen kommt und Verstopfungen entstehen.

Gemäß DE-A-2 358 080 und DE-A-2 643 214 werden wasserunlösliche Azofarbstoffe durch Diazotieren und Kuppeln in Gegenwart anionischer bzw. nichtionischer Dispergiermittel hergestellt und die Reaktionssalze anschließend durch ein Membrantrennverfahren entfernt. Auch diese Verfahren sind nicht optimal, da sie einen hohen Wasserverbrauch und Zeitaufwand erfordern.

Es wurde nun gefunden, daß man unter Vermeidung der vorstehend geschilderten Nachteile konzentrierte, lagerungsbeständige, flüssige Farbstoffpräparationen aus wasserreichen Preßkuchen erhält, wenn man diese in Gegenwart von Dispergiermitteln einer Naßmahlung unterwirft und anschließend mittels Membrantrennverfahren auf einen höheren Farbstoffgehalt aufkonzentriert.

Geeignete Farbstoffe für den Einsatz im erfindungsgemäßen Verfahren sind beliebige in Wasser schwer- bzw. unlösliche Farbstoffe, wie Dispersionsfarbstoffe, Dispersionsaufheller, Küpenfarbstoffe und Pigmente, die den unterschiedlichsten Konstitutionsklassen angehören können.

Bevorzugt eingesetzt wird das neue Verfahren bei solchen Anthrachinon-Dispersionsfarbstoffen, die bei ihrer Herstellung in amorpher Form anfallen und sich bei ihrer Isolierung nicht annähernd zu so hohen Konzentrationen abpressen lassen, daß aus den Filter-Preßkuchen direkt die für den Markt geeigneten konzentrierten Flüssigmarken hergestellt werden können.

Als Dispergiermittel kommen alle üblichen anionischen und nichtionischen Dispergiermittel in Betracht — mit Ausnahme bei der Pigmentformierung, wo nur nichtionische Verbindungen eingesetzt werden.

Bevorzugt werden solche Dispergiermittel eingesetzt, die zuvor bereits einem Membrantrennprozeß unterworfen waren. Dadurch werden die niedrigmolekularen und oftmals nicht sehr wirksamen Dispergiermittel-Bestandteile sowie auch anorganische Salze abgetrennt (vgl. z. B. DE-B-1 469 606 = GB-A-1 043 490), die einen stark negativen Einfluß auf die Dispersionsstabilität haben.

Als nichtionische Dispergiermittel werden vorzugsweise Äthylenoxid- oder Propylenoxidaddukte mit 3 bis 50 Mol Äthylenoxid bzw. Propylenoxid an Alkohole, Alkylphenole, Carbonsäuren oder Amine (s. Schönfeldt, Oberflächenaktive Anlagerungsprodukte des Äthylenoxids, S. 18 bis 57 [1959]) eingesetzt. Besonders bevorzugt sind Oxalkylierungsprodukte von Kondensationsprodukten aus $C_6 - C_{12}$-Alkylphenolen, Cyclohexylamin und Formaldehyd sowie aus Styrol oder seinen Derivaten und Phenol.

Als anionische Dispergiermittel sind beispielhaft genannt:

Sulfatierte Alkylenoxidaddukte, sulfatierte partiell veresterte mehrwertige Alkohole, Alkylsulfonat, Natriumdialkylsulfosuccinate, Alkylbenzolsulfonate, Kondensationsprodukte aus Naphthalinsulfonsäuren und Formaldehyd, Ligninsulfonate und Oxyligninsulfonate sowie Kondensationsprodukte aus Ditolyläther, Formaldehyd und Schwefelsäure, oder Kondensationsprodukte aus

m-Kresol, 2-Naphthol-6-sulfonsäure, Formaldehyd und Natriumsulfat.

Bei der praktischen Durchführung des neuen Verfahrens geht man zweckmäßigerweise so vor, daß der Farbstoffpreßkuchen mit so viel Dispergiermittel unter Verwendung eines schnellaufenden Rührers angeschlagen wird, daß sich eine gut fließfähige Form bildet. Dann können vor, während oder nach einer Naßzerkleinerung weitere Dispergiermittelmengen zugegeben werden, wobei im Falle der nicht mit Membrantrennverfahren behandelten Dispergiermittel der bei der Aufkonzentrierung erfolgende Verlust an wirksamer Substanz zu berücksichtigen ist.

Bei Dispersionsfarbstoffen, -aufhellern und Küpenfarbstoffen werden die Preßkuchen nach Zugabe von 1–100% — vorzugsweise 5–50% — Dispergiermittel, bezogen auf den Farbstoffgehalt des Preßkuchens, unter starkem Rühren »verflüssigt«. Danach können weitere Dispergiermittelmengen zugesetzt werden. Zweckmäßigerweise wird jedoch die gesamte für die Stabilität der Dispersion benötigte Dispergiermittelmenge von 10–200%, vorzugsweise 15–100%, vor der Naßzerkleinerung zugegeben.

Pigmentpreßkuchen werden in der Weise formiert, daß man 5–10% nichtionisches Dispergiermittel, bezogen auf den Pigmentgehalt des Preßkuchens, zur »Verflüssigung« unter starkem Rühren zugibt und nach einer Vorzerkleinerung und der anschließenden Naßmahlung die Dispergiermittelmenge ggf. auf 10% erhöht.

Die Vorzerkleinerung kann z. B. über Stein- und Zahnkolloidmühlen erfolgen. Bei der sich daran anschließenden Naßzerkleinerung können neben den Kolloidmühlen auch Schwing- und Kugelmühlen, Vibromühlen, Dissolver und Sub-Mikron-Disperser als Hochdruck-Dispergiergeräte verwendet werden.

Vorzugsweise werden jedoch kontinuierliche Rührwerksmühlen mit Mahlkörpern, vorzugsweise solche aus SiO$_2$ von 0,2–5 mm Durchmesser, verwendet.

Nach der Mahlbehandlung wird die stabile aber nicht ausreichend konzentrierte Dispersion mittels eines Membran-Trennprozesses aufkonzentriert.

Solche Membran-Trennprozesse sind in der Literatur beispielsweise in U. F. Franck, Dechema-Monographie, 75, 1452 bis 1485, 9/37 (1974), ausführlich als Reversosmose, Ultrafiltration, Dialyse oder Elektrodialyse beschrieben.

Vorzugsweise wird die Druckpermeation, also Reversosmose und Ultrafiltration, angewendet, bei der der Durchtritt von Wasser und evtl. gelösten Stoffen durch die semipermeable Membran unter der treibenden Kraft eines den osmotischen Druck übersteigenden hydrostatischen Druckes stattfindet.

Die Druckpermeation für das erfindungsgemäße Verfahren läßt sich auf allen handelsüblichen Druckpermeationsgeräten durchführen. Solche Geräte können z. B. als Platten-Rahmen-, Rohr-, Schlauch-, Hohlfaser oder Hohlfeinfasermodul ausgebildet sein. Erfindungsgemäß verwendbare und in die oben beschriebenen Moduln einbaubare Membranen sind z. B. solche aus Cellulose, Cellulosedi- bzw. -triacetat oder solche aus synthetischen Polymeren wie z. B. Polyamiden, Polyolefinen und Polysulfonen. Auch Membranen aus porösem Glas oder »dynamische Membranen«, gebildet aus Schwermetalloxiden und z. T. wasserlöslichen Polymeren wie z. B. Polyacrylsäure, können verwendet werden. Membranen der vorgenannten Art sind beispielsweise in U. F. Franck (s. oben) und Hwang; Kammermeyer, Membranes in separations (Techniques of Chemistry), Vol. 7, 1975, Wiley, New York, beschrieben.

Die zur Anwendung kommenden Membranen halten den feinverteilten Farbstoff bzw. Aufheller überwiegend, vorzugsweise vollständig zurück.

Solche Membranen haben einen »cut off level« von Molekulargew. (MG.) 1000–1 000 000. Vorzugsweise werden Membranen mit einem »cut off level« von ca. 5000 MG. bis ca. 20 000 eingesetzt.

Vorzugsweise wird die Druckpermeation bei Drücken zwischen 0,5 und 60 bar durchgeführt. Der pH-Wert und die Temperatur sind für die Durchführung des Trennprozesses bezüglich der Membranen nicht kritisch, da für alle pH- und Temperatur-Bereiche geeignete Membranen zur Verfügung stehen.

Nach der Aufkonzentrierung der flüssigen Farbstoffpräparation erfolgt noch die genaue Einstellung der Farbstärke mit z. B. Wasser, hydrotropen Substanzen wie Äthylenglykolen, Glyzerin etc., Konservierungsmitteln, Netzmitteln, Entschäumern u. a., wenn diese nicht schon zu einem früheren Zeitpunkt zugegeben werden. Eine Zugabe kann z. B. vor dem Membrantrennverfahren erfolgen. Damit ist es möglich, genau bei der angestrebten Farbstärke die Aufkonzentrierung zu beenden.

Die nach dem erfindungsgemäßen Verfahren erhaltenen konzentrierten und stabilen flüssigen Farbstoffpräparationen können vielfältig eingesetzt werden.

Die Präparationen von Dispersionsfarbstoffen und Dispersionsaufhellern sind für die Färbung von Polyester-, Polyamid-6-, Polyamid-6,6-, Polyacrylnitril-, Cellulose-2$^1$/$_2$- und Cellulose-Triacetat-Materialien in Form von Geweben, Gewirken, Gestricken, Muffs, Kabeln, Wickeln, Spulen als Filamente, Pflock, Flocke und Garn etc. geeignet und können nach den üblichen Färbeverfahren appliziert werden.

Die Pigmentdispersionen eignen sich zur Herstellung von Dispersionsanstrichfarben auf Basis von Polyvinylacetat, Polyvinylacetatcopolymeren, Styrol-Butadien-Mischpolymerisaten u. a. sowie zur Herstellung von Tapetenanstrichfarben auf der Basis von Cellulosederivaten und zur Herstellung von Druckfarben für Papier sowie für den Textildruck.

3

0 024 667

## Beispiele

### Beispiel 1

6000 g wasserfeuchter Preßkuchen von 1,4-Diamino-2-phenylsulfonylanthrachinon mit einem Trockengehalt von 40,8% werden mit 1249 g ultrafiltrierter Ligninsulfonsäure unter Rühren in eine fließfähige Form gebracht. Die gesamte Suspension wird in einer Perlmühle einer Naßzerkleinerung während 4 Durchgängen unterworfen. Die Mühle wird anschließend mit 1000 g Wasser gespült und mit dem Mahlteig vereinigt, so daß ein Farbstoffanteil von ca. 31% in der Dispersion resultiert.

Diese Dispersion wird in einem Druckpermeationslaborgerät mit einer 0,36-m²-Membran aus einem Polysulfon (Trenngrenze ca. MG. 6000) bei 40 bar und 600 l/h so lange durch den Modul gepumpt, bis der Farbstoffanteil in der Dispersion 36% beträgt. Die durchschnittliche Permeationsstromdichte J beträgt 150 l/m²d. Anschließend erfolgt die Einstellung der Dispersion mit Glyzerin als Eintrocknungsverhinderer und mit Konservierungsmittel auf einen Farbstoffanteil von ca. 30%.

Die Qualität der so hergestellten Flüssigeinstellung entspricht derjenigen, die konventionell in aufwendiger Weise über Zwischentrocknung in einem Schaufeltrockner vom Typ Venuleth erhalten wird.

### Beispiel 2

8533,3 g eines Preßkuchens von Disperse Blue 56 (C.I. 63 285) mit einem Trockengehalt-Farbstoffanteil von ca. 15% werden mit 1280 g ultrafiltrierter Ligninsulfonsäure (Na-Salz) unter Rühren »verflüssigt«. Die gesamte Suspension mit einem Farbstoffanteil von ca. 13% wird einer Naßzerkleinerung in einer Perlmühle während 4 Durchgängen unterzogen und mit 1000 g Spülwasser vereinigt, so daß ein Farbstoffanteil von ca. 12% resultiert. Bei der anschließenden Druckpermeation werden 2400 cm³ Permeat auf dem gleichen Gerät, mit gleicher Membran und unter gleichen Bedingungen wie in Beispiel 1 abgezogen. Die Permeatstromdichte beträgt über den gesamten Versuch gemittelt J = 180 l/m²d.

Der Farbstoffanteil der aufkonzentrierten Dispersion beträgt ca. 15%.

Durch Zugabe von Antrocknungsverhinderer, Konservierungs- und Netzmittel sowie Wasser wird auf die Farbstärke des Typs der Handelsware eingestellt.

Die Qualität der so hergestellten Flüssigeinstellung entspricht derjenigen, die in üblicher Weise im »Venuleth« hergestellt wird.

### Beispiel 3

In gleicher Weise wie in Beispiel 2 beschrieben, wird ein Preßkuchen von bromiertem 1,8-Dihydroxy-4,5-diaminanthrachinon mit einem Farbstoffanteil von 18% und hierauf bezogen 75% ultrafiltrierter Ligninsulfonsäuren versetzt, gemahlen und auf einem Farbstoffanteil von ca. 25% über das Membrantrennverfahren, analog Beispiel 1, J = 200 l/m²d aufkonzentriert, anschließend mit Konservierungsmittel versetzt und mit Wasser auf die gewünschte Farbstoffkonzentration eingestellt.

Die so hergestellte Suspension entspricht derjenigen, die mit viel mehr Arbeits-, Kosten- und Energieaufwand durch Sprühtrocknung und anschließende Knetung hergestellt wurde.

### Beispiele 4 – 8

Es wird wie in Beispiel 1 beschrieben verfahren. Es werden ohne Zwischentrocknung durch Druckpermeation gleich gute Ergebnisse wie nach der herkömmlichen Methode erzielt.

Die Druckpermeation erfolgt bei den Beispielen 5, 6 und 8 auf dem gleichen Gerät, gleicher Membran und gleichen Bedingungen wie in Beispiel 1. Für die Beispiele 4 und 7 wird eine Betriebsanlage mit einer 19-m²-Membran aus Polysulfon (Trenngrenze ca. MG. 6000) verwendet. Die Umwälzmenge für diesen Modul beträgt 8,5 m³ bei 40 bar.

4

| Beispiel | Farbstoff Disperse | Preßkuchen Menge (kg) | %-Gehalt Farbstoff | Lignisulfonsäure Ultraf. Menge (kg) | % vom Farb- stoffgehalt | Durch Druck- permeation entzogene Permeat- menge (kg) | Farbstoff-Konzentr. % vor Druckpermeation | nach | Durchschn. Permeat- stromdichte $(l/m^2 d)$ |
|---|---|---|---|---|---|---|---|---|---|
| 4 | Blue 139 | 13.600 | 23,5 | 2.080 | 65 | 3.600 | 20,4 | 26,5 | 150 |
| 5 | Orange 29 | 5 | 18,1 | 0,5 | 60 | 2.0 | 16,4 | 25,7 | 160 |
| 6 | Orange 66 | 6,7 | 18,8 | 0.880 | 70 | 2,500 | 16,2 | 24,8 | 360 |
| 7 | Red 82 | 13.400 | 20,5 | 1.400 | 50 | 4.800 | 18,5 | 27,3 | 290 |
| 8 | Violett 40 | 7,5 | 20,0 | 0,750 | 50 | 3,5 | 18,3 | 31,6 | 150 |

0 024 667

## Beispiel 9

4000 g Preßkuchen von C.I. Pigment Red 112 mit einem Pigmentgehalt von 20% werden unter Zusatz von 160 g eines nichtionischen Dispergiermittels, das durch Kondensation von 1 Mol Cyclohexylamin und 1 Mol Nonylphenol mit Formaldehyd und Umsetzen des Reaktionsproduktes mit 28 Mol Äthylenoxyd hergestellt wurde, mit Hilfe eines Schnellrührers »verflüssigt« und anschließend in einer schnellaufenden Rührwerksmühle gemahlen. Nach einer Stunde Mahldauer erhält man eine stabile Dispersion mit ausgezeichneter Feinverteilung.

Diese Dispersion wird in einem Druckpermeationstechnikumsgerät bei einem Druck von 20 bar über eine Membran mit einer Trenngrenze MG. 6000 geleitet. Dabei werden 2560 g Permeat abgezogen, die keinen Farbstoff enthalten. In diese Pigmentdispersion werden 400 g Äthylenglykol eingerührt.

Man erhält 2000 g einer gut fließfähigen, stabilen Pigmentdispersion mit 40% Pigment.

## Beispiel 10

4000 g Preßkuchen von C.I. Pigment Yellow 1 mit einem Pigmentgehalt von 24% werden unter Zusatz von 200 g eines nichtionischen Dispergiermittels, hergestellt durch Kondensation von 2,7 Mol Vinyltoluol mit 1 Mol Phenol und anschließend umgesetzt mit 28 Mol Äthylenoxid, mit Hilfe eines Schnellrührers »verflüssigt« und anschließend in einer schnellaufenden Rührwerksmühle gemahlen. Nach 30 min Mahldauer erhält man eine stabile Dispersion mit ausgezeichneter Feinverteilung.

Diese Dispersion wird in einem Druckpermeationstechnikumsgerät bei einem Druck von 20 bar über eine Membran mit Trenngrenze MG. 20 000 geleitet. Zunächst werden 2200 g farbstofffreies Permeat abgezogen. Nach dem Einrühren von 582 g Äthylenglykol werden weitere 582 g ebenfalls farbstofffreies Permeat abgezogen.

Man erhält 2000 g einer gut fließfähigen, stabilen Pigmentdispersion mit ca. 40% Pigment.

## Patentansprüche

1. Verfahren zur Herstellung von konzentrierten flüssigen Farbstoffpräparationen von in Wasser schwer- bzw. unlöslichen Farbstoffen durch Überführung des wasserfeuchten Farbstoffpreßkuchens unter Zugabe eines Dispergiermittels in eine fließfähige Form und anschließende Naßmahlung, dadurch gekennzeichnet, daß man die dabei resultierende, nicht ausreichend konzentrierte Dispersion mittels eines Membrantrennverfahrens auf höhere Farbstoffgehalte aufkonzentriert.

2. Verfahren nach Anspruch 1, dadurch gekennzeichnet, daß man als Farbstoffpreßkuchen solche mit Farbstoffgehalten von 5 – 50%, vorzugsweise 10 – 40%, einsetzt.

3. Verfahren nach Anspruch 1, dadurch gekennzeichnet, daß als Membrantrennverfahren die Druckpermeation eingesetzt wird.

4. Verfahren nach Anspruch 1, dadurch gekennzeichnet, daß der Farbstoffgehalt des mit Dispergiermitteln versetzten Preßkuchens auf 15 – 40% mittels des Membrantrennverfahrens aufkonzentriert wird.

5. Verfahren nach Anspruch 1, dadurch gekennzeichnet, daß als Farbstoffe Dispersionsfarbstoffe, Küpenfarbstoffe oder Dispersions-Aufheller eingesetzt werden.

6. Verfahren nach Anspruch 5, dadurch gekennzeichnet, daß als Dispersionsfarbstoffe die in den Beispielen 1, 2 und 3 verwendeten Farbstoffe eingesetzt werden.

7. Verfahren nach Ansprüchen 1, 5 oder 6, dadurch gekennzeichnet, daß zur Formierung der Farbstoffe gemäß dieser Ansprüche als Dispergiermittel Ligninderivate eingesetzt werden, die bereits zuvor mittels eines Membrantrennverfahrens behandelt wurden.

8. Verfahren nach Anspruch 1, dadurch gekennzeichnet, daß als Farbstoffe Pigmente eingesetzt werden.

9. Verfahren nach Ansprüchen 1 oder 8, dadurch gekennzeichnet, daß zur Formierung der Pigmente als Dispergiermittel nichtionische Dispergiermittel eingesetzt werden.

10. Verfahren zum Färben synthetischer Fasermaterialien sowie zur Herstellung von Dispersionsanstrichfarben, Tapetenanstrichfarben und Druckfarben, dadurch gekennzeichnet, daß man Präparationen gemäß Anspruch 1, enthaltende Dispersionsfarbstoffe bzw. Pigmente, verwendet.

## Claims

1. Process for producing concentrated liquid dyestuff preparations of dyestuffs which are sparingly soluble or insoluble in water, by converting the water-moist dyestuff press-cake into a flowable form by adding a dispersing agent and subsequently subjecting this product to wet grinding, characterised in that the dyestuff content of the thereby resulting, insufficiently concentrated dispersion is increased by means of a membrane separation process.

2. Process according to Claim 1, characterised in that dyestuff press-cakes with dyestuff contents of 5—50%, preferably 10—40%, are employed.

3. Process according to Claim 1, characterised in that pressure permeation is employed as the membrane separation method.

4. Process according to Claim 1, characterised in that the dyestuff content of the press-cake to which dispersing agents have been added is increased to 15—40% by means of the membrane separation method.

5. Process according to Claim 1, characterised in that disperse dyestuff, vat dyestuffs or disperse brighteners are amployed as the dyestuffs.

6. Process according to Claim 5, characterised in that the dyestuff used in Examples 1, 2 and 3 are employed as disperse dyestuffs.

7. Process according to Claims 1, 5 or 6, characterised in that lignin derivatives which have already been subjected to membrane separation treatment beforehand are employed as dispersing agents for finishing the dyestuffs according to these claims.

8. Process according to Claim 1, characterised in that pigments are employed as the dyestuffs.

9. Process according to Claims 1 or 8, characterised in that non-ionic dispersing agents are employed for finishing the pigments.

10. Process for dyeing synthetic fibre materials and for producing emulsion paints, wallpaper paints and printing inks, characterised in that preparations according to Claim 1, containing disperse dyestuffs or pigments, are used.


**Revendications**

1. Procédé de production de préparations liquides concentrées de colorants peu solubles ou insolubles dans l'eau, par transformation du colorant humide retenu par le filtre-presse, avec addition d'un dispersant, en une forme fluide et broyage subséquent par voie humide, caractérisé en ce que la dispersion résultante, insuffisamment concentrée, est concentrée à des teneurs élevées en colorant par une opération de séparation à l'aide d'une membrane.

2. Procédé suivant la revendication 1, caractérisé en ce qu'on utilise comme matières colorantes retenues par un filtre-presse, des matières ayant des teneurs en colorant de 5 à 50%, de préférence de 10 à 40%.

3. Procédé suivant la revendication 1, caractérisé en ce qu'on utilise comme procédé de séparation à l'aide d'une membrane le procédé de perméation sous pression.

4. Procédé suivant la revendication 1, caractérisé en ce que la teneur en colorant du résidu de filtre-presse additionné d'agents dispersants est concentrée à 15—40% par le procédé de séparation à l'aide d'une membrane.

5. Procédé suivant la revendication 1, caractérisé en ce qu'on utilise comme colorants des colorants dispersés, des colorants pour cuve ou des azurants dispersés.

6. Procédé suivant la revendication 5, caractérisé en ce qu'on utilise comme colorants dispersés les colorants utilisés dans les exemples 1, 2 et 3.

7. Procédé suivant les revendications 1, 5 ou 6, caractérisé en ce qu'on utilise comme dispersants pour la transformation des colorants suivant ces revendications, des dérivés de lignine qui ont déjà été traités auparavent au moyen d'un procédé de séparation à l'aide d'une membrane.

8. Procédé suivant la revendication 1, caractérisé en ce qu'on utilise comme colorants des pigments.

9. Procédé suivant les revendications 1 ou 8, caractérisé en ce qu'on utilise comme dispersants des dispersants non ioniques pour la transformation des pigments.

10. Procédé de teinture de matières fibreuses synthétiques ainsi que de production de peintures dispersées, de peintures pour papier peint et d'encres d'impression, caractérisé en ce qu'on utilise des préparations suivant la revendication 1 contenant des colorants dispersés ou des pigments.